# EUROPÄISCHE PATENTANMELDUNG

(11) **EP 3 715 087 A1**
(43) Veröffentlichungstag der Anmeldung: **30.09.2020**
(21) Anmeldenummer: 20163519.0
(22) Anmeldetag: 17.03.2020
(51) Int. Cl.: B29C 45/28

(54) **VORRICHTUNG ZUM BETÄTIGEN EINER NADELVERSCHLUSSDÜSE IN EINER KUNSTSTOFFSPRITZMASCHINE SOWIE KUNSTSTOFFSPRITZMASCHINE ENTHALTEND EINE SOLCHE VORRICHTUNG**

(30) Priorität: 28.03.2019 DE 102019108068
(71) Anmelder: Meusburger Deutschland GmbH, 68519 Viernheim (DE)
(72) Erfinder: Hoffmann, Horst, 64658 Erlenbach (DE)
(74) Vertreter: Kesselhut, Wolf

(57) **Zusammenfassung**

Eine Vorrichtung (1) zum Betätigen einer Nadelverschlussdüse in einer Kunststoffspritzmaschine, die ein Gehäuse (2) mit einem darin geformten Druckmittelraum (4) umfasst, welcher über eine Zu- und Ableitung (6a, 6b) mit einem Druckfluid beaufschlagbar ist, sowie einen im Druckmittelraum (4a, 4b) zwischen zwei Endstellungen hin und her bewegbaren Kolben (10) aufweist, welcher über ein umlaufendes Dichtelement (12) dichtend im Druckmittelraum (4a, 4b) geführt ist und welcher auf eine Verschlussnadel (14) der Nadelverschlussdüse wirkt, zeichnet sich dadurch aus, dass der Kolben (10) und der Druckmittelraum (4a, 4b) einen ovalen Querschnitt besitzen. Die Erfindung betrifft weiterhin eine Kunststoffspritzmaschine, welche eine solche Vorrichtung (1) enthält.

## Beschreibung

Die Erfindung betrifft eine Vorrichtung zum Betätigen einer Nadelverschlussdüse in einer Kunststoffspritzmaschine sowie eine Kunststoffspritzmaschine enthaltend eine solche Vorrichtung gemäß dem Oberbegriff von Anspruch 1 und 10.

Auf dem Gebiet der Kunststoffverarbeitung werden zur Herstellung von Kunststoffformteilen Nadelverschlussdüsen eingesetzt, mit denen über einen Schmelzgut-Verteiler zugeführter, durch Erhitzen verflüssigter Kunststoff durch eine Zwischenplatte hindurch in eine Spritzgussform injiziert wird, aus der das Formteil nach dem Erstarren des Kunststoffs entnommen werden kann.

Die Nadelverschlussdüsen werden gewöhnlich mit einer der jeweiligen Nadelverschlussdüse zugeordneten hydraulischen Betätigungsvorrichtung geöffnet oder geschlossen. Hierbei wird die Verschlussnadel einer jeden Nadelverschlussdüse bekanntermaßen durch einen in einem Zylinder der Betätigungsvorrichtung angeordneten doppeltwirkenden Kolben entlang der zur Achse der Verschlussnadel fluchtenden oder parallelen Zylinderachse bewegt. Eine solche Betätigungsvorrichtung ist beispielsweise in der DE 10 2010 032 340 A1 der Anmelderin beschrieben.

Zur Bewegung des Kolbens werden die beiden durch den Kolben getrennten Zylinderkammern des Zylinders bekanntermaßen mit einem Druckfluid - in der Regel Hydraulikflüssigkeit oder auch Druckluft - beaufschlagt, welches über eine jeweilige Druckfluidleitung von einer zentralen Ventil- und Verteilerkonsole zugeführt wird.

Dabei bestehen besondere Anforderungen an den Platzbedarf der Betätigungsvorrichtungen, da immer kleinere Formteile in zunehmend größeren Mengen im Spritzgussverfahren hergestellt werden. Um hierbei die Anzahl der Taktzyklen insgesamt zu verringern und dementsprechend die Fertigungskosten zu reduzieren, werden Spritzguss-Kleinteile, wie z.B. Flaschenverschlüsse, Kugelschreiberhülsen oder Kunststofftasten für Computertastaturen, mit Hilfe einer möglichst großen Anzahl von z.B. zehn oder mehr nebeneinander angeordneten identischen Einzelkavitäten innerhalb einer gemeinsamen Spritzgussform in einem Arbeitsgang gleichzeitig erzeugt, die jeweils über eine eigene Nadelverschlussdüse mit einer zugehörigen hydraulischen oder pneumatischen Betätigungsvorrichtung über einen Heißkanalverteiler mit flüssigem Kunststoffmaterial beaufschlagt werden. Da die Betätigungsvorrichtungen zur Erzeugung der erforderlichen Schließkräfte bei einem vorgegebenen Druck der Hydraulikflüssigkeit, bzw. des Druckfluids, eine gewisse Mindestkolbenfläche besitzen müssen, ist der Abstand zwischen benachbarten Kavitäten oder Spritzgussformen durch die Breite der im Querschnitt kreisförmigen Kolben in den Betätigungsvorrichtungen beschränkt.

Demgemäß liegt der Erfindung die Aufgabe zugrunde, eine Betätigungsvorrichtung zum Betätigen einer Verschlussnadel in einer Kunststoffspritzmaschine zu schaffen, welche bei einer vorgegebenen Betätigungskraft eine möglichst geringe Baubreite aufweist.

Diese Aufgabe wird erfindungsgemäß durch eine Vorrichtung mit den Merkmalen von Anspruch 1 gelöst.

Eine weitere Aufgabe der Erfindung ist es, eine Kunststoffspritzmaschine zu schaffen, mit der sich bei einer vorgegebenen Baugröße eine größere Anzahl von Spritzguss-Kleinteilen in einem Arbeitsgang herstellen lässt.

Diese Aufgabe wird erfindungsgemäß durch eine Kunststoffspritzmaschine mit den Merkmalen von Anspruch 10 gelöst.

Weitere Merkmale der Erfindung sind in den Unteransprüchen enthalten.

Gemäß der Erfindung umfasst eine Vorrichtung zum Betätigen einer Nadelverschlussdüse in einer Kunststoffspritzmaschine ein Gehäuse mit einem darin geformten Druckmittelraum, welcher über eine Zu- und Ableitung mit einem Druckfluid beaufschlagt werden kann. Innerhalb des Druckmittelraums befindet sich ein zwischen zwei Endstellungen hin und her bewegbarer Kolben, der über ein umlaufendes Dichtelement dichtend im Druckmittelraum geführt ist und der auf eine Verschlussnadel der Nadelverschlussdüse wirkt. Die erfindungsgemäße Vorrichtung zeichnet sich dadurch aus, dass der Kolben und der Druckmittelraum einen ovalen, nicht kreisförmigen Querschnitt besitzen. Durch diese erfindungsgemäße Bauform, die sämtliche bekannt Querschnittsformen, d.h. Grundflächen von Kolben mit einschließen soll, die anders ausgedrückt eine durchgängig umlaufende Umfangslinie besitzen, aber nicht kreisrund sind, ist es in vorteilhafter Weise möglich, die Baubreite der Betätigungsvorrichtungen für die Verschlussnadeln der jeweiligen Einzelkavitäten zu verringern während die Fläche des Kolbens, und damit die bei gleichem Druck auf die Verschlussnadel wirkende Kraft, unverändert bleibt. Durch eine Verringerung der Baubreite der Betätigungsvorrichtungen kann somit der Abstand zwischen zwei benachbarten Einzelkavitäten reduziert werden. Bei vorgegebener maximal möglicher Baubreite kann außerdem durch die ovale, nicht kreisförmigeBauform die wirksame Querschnittsfläche des Kolbens vergrößert und dadurch bei gleichem Nutzmitteldruck des eingesetzten Druckfluids eine größere Krafteinwirkung auf die Verschlussnadel erzielt werden, was einen schnelleren Öffnungs- und Schließvorgang und infolgedessen eine präzisere Dosierung von Schmelzgut, insbesondere beim sogenannten Kaskadenspritzen, ermöglicht. Im Rahmen der vorliegenden Anmeldung sollen jedoch auch solche Ausführungsformen mit vom Schutz eingeschlossen werden, bei denen die Umfangslinie nicht streng durchgängig ausgeführt ist, d.h. im mathematischen Sinne stetig differenzierbar, sondern z.B. eine Durchbrechung in Form eines in die äußere Umfangsfläche des Kolbens eingebrachten Kanals aufweist, wie er im Zusammenhang mit derartigen Betätigungseinrichtungen zur Zirkulation des Druckfluids zwischen dem oberen und unteren Druckmittelraum bekannt ist.

Gemäß einer bevorzugten Ausführungsform der Erfindung kann der Kolben insbesondere eine Querschnittsfläche mit elliptischer Form aufweisen. Das Längenverhältnis der Hauptachse und der zu dieser orthogonalen Nebenachse der Ellipse, die die Querschnittsfläche des Kolbens beschreibt, ist nach einem weiteren der Erfindung zugrunde liegenden Gedanken größer gleich 1 : 5 und kleiner gleich 1 : 1,5, d.h. liegt zwischen 0,2 und 0,66.

In der bevorzugten Ausführungsform der erfindungsgemäßen Vorrichtung ist der Kolben mit elliptischem Querschnitt in einen ersten Gehäuseteil und einen zweiten, lösbar mit diesem verbindbaren, deckelförmigen Gehäuseteil aufgeteilt, zwischen denen eine umlaufende Nut zur Aufnahme eines ein- oder mehrteiligen Dichtelements geformt ist.

Weiterhin ist es bei der bevorzugten Ausführungsform der erfindungsgemäßen Vorrichtung vorgesehen, dass im ersten Gehäuseteil des Kolbens ein Durchgangskanal zur Aufnahme einer Verschlussnadel geformt ist, welcher einen der äußeren Form der Verschlussnadel angepassten Querschnitt besitzt. Durch die Befestigung der Verschlussnadel direkt am Kolben kann auf eine zusätzliche Kolbenstange, welche üblicherweise in derartigen Betätigungsvorrichtungen zur Kopplung von Kolben und Verschlussnadel verwendet wird, verzichtet werden. Dabei wird die Außenfläche der Verschlussnadel, die bevorzugt bearbeitet, z.B. geschliffen ist, in vorteilhafter Weise als Dichtfläche genutzt. Auf diese Weise ist es durch den zweiteiligen Aufbau des Kolbens möglich, die Druckfluidkammer, in der sich dieser befindet, nicht gegen eine Kolbenstange, sondern direkt gegen die Verschlussnadel abzudichten.

In den ersten Gehäuseteil des Kolbens und/oder den zweiten deckelförmigen Gehäuseteil des Kolbens ist bevorzugt eine nicht rotationssymmetrische, insbesondere rechteckige oder ovale Ausnehmung eingebracht, in welcher ein der Form dieser Ausnehmung angepasster, fest mit dem einen Ende der Verschlussnadel verbundener Nadelkopf verdrehsicher aufgenommen werden kann. Hierdurch ergibt sich eine besonders einfache Konstruktion, die eine schnelle und einfache Demontage der Verschlussnadel vom Kolben ermöglicht. Alternativ ist jedoch auch eine kreisrunde Form der Ausnehmung, bzw. des Nadelkopfes denkbar, die einfacher und kostengünstiger gefertigt werden kann, jedoch keine Verdrehsicherung der Verschlussnadel gewährleistet.

Bei der zuvor beschriebenen Ausführungsform ist bevorzugt ebenfalls eine um den ersten Gehäuseteil des Kolbens herumlaufende Nut vorgesehen. Diese Nut ist in einen radial innenliegenden ersten Nutabschnitt sowie einen gegenüber diesem radial außenliegenden zweiten umlaufenden Nutabschnitt aufgeteilt. In den radial innenliegenden ersten Nutabschnitt ist ein gummielastisches, bevorzugt geschlossen umlaufendes erstes Dichtelement eingesetzt, während im radial außenliegenden Nutabschnitt ein geschlossen umlaufendes zweites Dichtelement aufgenommen ist, das insbesondere ein gummielastischer O-Ring sein kann.

Im Vergleich zu den bekannten Betätigungseinheiten mit einem kreisrunden Kolbenquerschnitt führt die erfindungsgemäße nicht kreisrunde Bauform des Kolbens zu einer kleineren Auflagefläche des Dichtelements in der Nut während des Einsetzens des in sich geschlossenen Elements in die umlaufende Nut am Kolben. Hierdurch ergibt sich der Vorteil, dass die zum Einsetzen des Dichtelements erforderliche Überdehnung des Dichtelements auf einen längeren wenig gekrümmten Bereich beschränkt werden kann, wodurch in vorteilhafter Weise ein übermäßiges Überdehnen des Materials über die gesamte Länge hinweg, wie dies bei kreisrunden Kolben aufgrund der stetigen Krümmung in der Regel erforderlich ist, verhindert werden kann.

Nach einem weiteren der Erfindung zugrunde liegenden Gedanken ist das Gehäuse der Betätigungsvorrichtung zweiteilig aufgebaut. Den ersten Teil bildet ein oberer, den Druckmittelraum enthaltender Gehäuseabschnitt und den zweiten Teil bildet ein unterer, lösbar am ersten oberen Gehäuseabschnitt befestigter deckelartiger Gehäuseabschnitt zum Verschließen des Druckmittelraums. Hierbei kann es vorgesehen sein, dass im zweiten deckelartigen Gehäuseabschnitt eine weitere Durchgangsbohrung geformt ist, durch welche hindurch die am ovalen, bzw. nicht kreisförmigen Kolben aufgenommene Verschlussnadel hindurchgeführt werden kann.

Bei der zuvor beschriebenen bevorzugten Ausführungsform ist es weiterhin vorgesehen, dass im zweiten deckelartigen Gehäuseabschnitt ein die Verschlussnadel umgebendes umlaufendes Verschlussnadel-Dichtelement angeordnet ist. Dieses Verschlusselement hat die Funktion, den Druckmittelraum gegen ein Austreten von Druckfluid beim Verfahren des Kolbens gegenüber der Außenseite des Gehäuses abzudichten. Das Verschlussnadel-Dichtelement umfasst dazu einen radial außenliegenden umlaufenden Ring aus gummielastischem Material, insbesondere einen O-Ring, sowie einen innerhalb von diesem angeordneten radial innenliegenden umlaufenden Dichtring aus Dichtwerkstoff, welcher die Außenseite der Verschlussnadel kontaktiert. Diese beiden Dichtringe sind in einer koaxial zur zweiten Durchgangsbohrung geformten Ausnehmung im zweiten Gehäuseabschnitt aufgenommen. Die Ausnehmung wird durch ein weiteres Verschlusselement nach Art einer Quetschdichtung verschlossen, welches eine dritte Durchgangsbohrung aufweist, durch die sich die Verschlussnadel hindurch erstreckt.

Die Erfindung wird nachfolgend mit Bezug auf die Zeichnungen anhand einer bevorzugten Ausführungsform beschrieben.

In den Zeichnungen zeigen:
- Fig. 1: eine perspektivische Darstellung der bevorzugten Ausführungsform der erfindungsgemäßen Betätigungsvorrichtung,
- Fig. 2: eine vertikale Schnittdarstellung der bevorzugten Ausführungsform der erfindungsgemäßen Betätigungsvorrichtung, und
- Fig. 3: eine Querschnittsdarstellung der bevorzugten Ausführungsform der Betätigungsvorrichtung in Höhe des nicht kreisförmigen ovalen Kolbens, und
- Fig. 4: eine weitere vereinfachte Ausführungsform eines erfindungsgemäßen Kolbens mit einer ovalen, nicht kreisförmigen Querschnittsfläche.

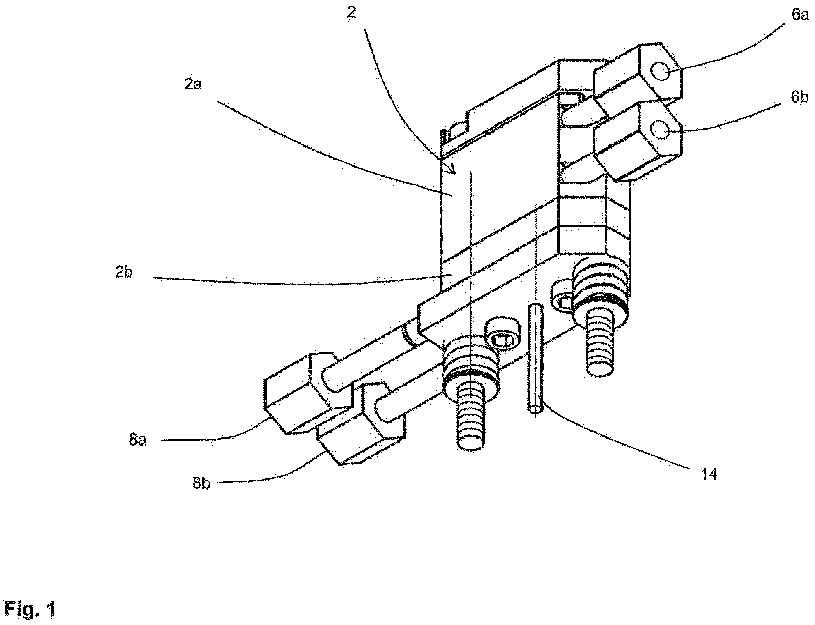

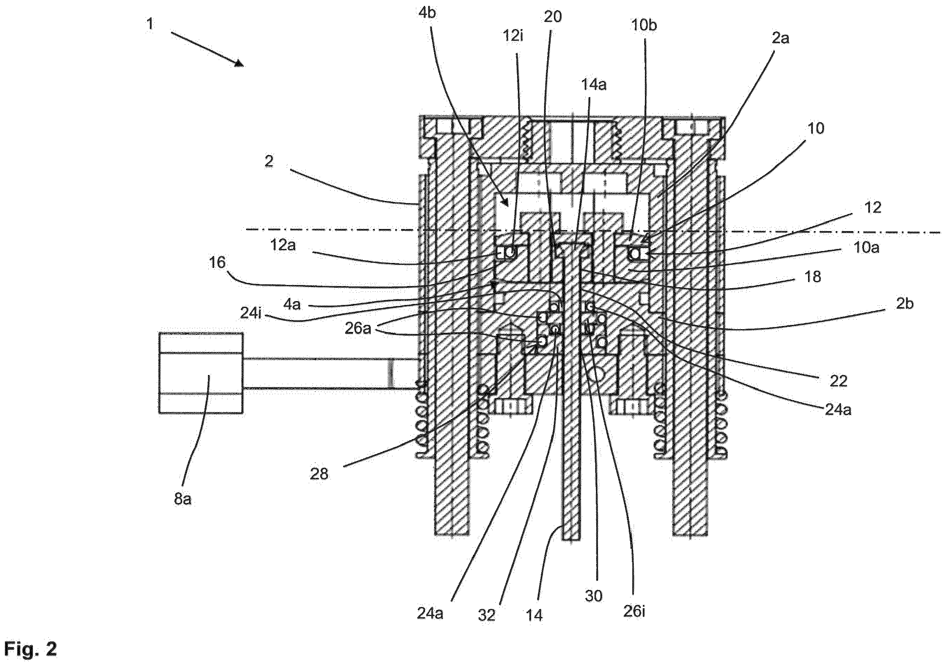

Wie in Fig. 1 gezeigt ist, umfasst eine erfindungsgemäße Betätigungsvorrichtung 1 ein Gehäuse 2, das in einen ersten oberen Gehäuseabschnitt 2a und einen zweiten, an diesem bevorzugt lösbar befestigten unteren deckelartigen Gehäuseabschnitt 2b unterteilt ist, die einen Druckmittelraum (Fig. 2) einschließen, der einen nicht näher erkennbaren unteren Druckmittelraum 4a sowie einen oberen Druckmittelraum 4b umfasst. An den Seiten des Gehäuses 2 befinden sich Zuleitungen 6a und Ableitungen 6b, die das Druckfluid in für derartige Betätigungseinrichtungen bekannter Weise in den durch einen Kolben 10 unterteilten unteren und oberen Druckmittelraum 4a, 4b leiten, wie dies in Fig. 2 dargestellt ist. Weiterhin sind in Fig. 1 und 2 zusätzlich noch Zu- und Ableitungen 8a, 8b für ein Kühlmittel zum Kühlen der Betätigungsvorrichtung 1 gezeigt.

Der Kolben 10 besitzt einen nachfolgend allgemein als nicht kreisförmig und oval bezeichneten Querschnitt, der alle möglichen, nicht kreisrunden Querschnittsformen mit abgerundeten Ecken einschließen soll, z.B. elliptische Querschnittsformen, und der einen ersten Gehäuseteil 10a und einen zweiten, lösbar mit diesem verbindbaren deckelförmigen Gehäuseteil 10b aufweist, zwischen denen eine umlaufende Nut 16 zur Aufnahme eines Dichtelements 12 geformt ist.

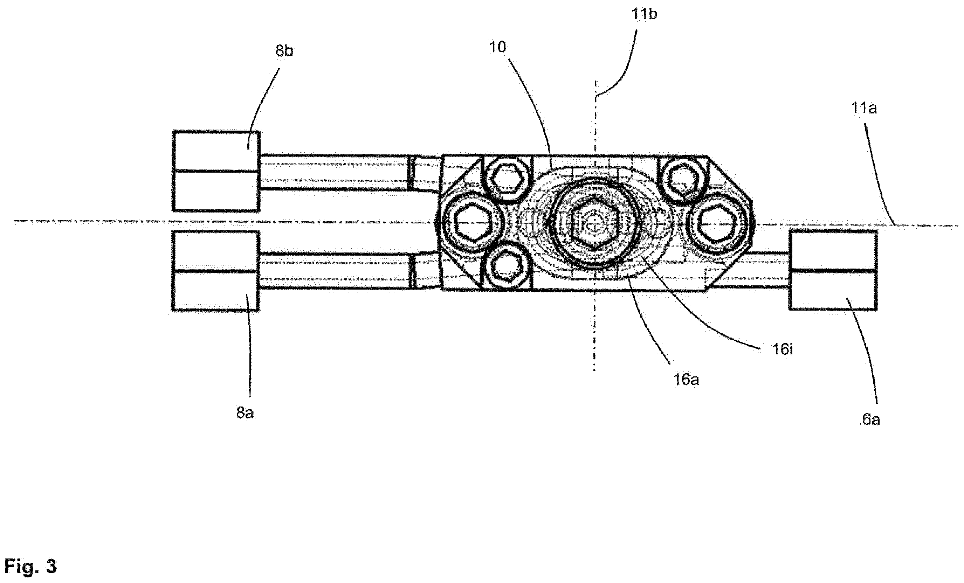

Gemäß Fig. 2 und 3 umfasst die umlaufende Nut 16 zum einen einen radial innenliegenden ersten Nutabschnitt 16i, in dem ein gummielastisches geschlossen umlaufendes erstes Dichtelement 12i aufgenommen ist. Dieses Dichtelement 12i ist bevorzugt ein gummielastischer O-Ring. Zum anderen umfasst die umlaufende Nut 16 einen gegenüber dem ersten radial innenliegenden Nutabschnitt 16i zweiten radial außenliegenden umlaufenden Nutabschnitt 16a, in dem ein geschlossen umlaufendes zweites Dichtelement 12a aufgenommen ist, welches aus einem für hadraulische Dichtungen bekannten Dichtwerkstoff besteht. Wie der Darstellung der Fig. 3 weiterhin entnommen werden kann, besitzt der Kolben 10 bei der bevorzugten Ausführungsform einen nicht kreisförmigen ovalen Querschnitt, welcher z.b. die Form oder eine der Form einer Ellipse angenäherte Form besitzen kann, die eine Hauptachse 11a und eine Nebenachse 11b aufweist. Das Längenverhältnis von Nebenachse 11b zu Hauptachse 11a ist hierbei bevorzugt größer gleich 1 : 5 und kleiner gleich 1 : 1,5 und beträgt besonders bevorzugt 2,7 : 3,8, d.h. 1 : 1,4.

Im ersten Gehäuseteil 10a ist weiterhin entsprechend der Darstellung von Fig. 2 ein erster Durchgangskanal 18 zur Aufnahme der zu betätigenden Verschlussnadel 14 geformt, der einen der äußeren Form der Verschlussnadel 14 angepassten Querschnitt besitzt. Ferner ist im ersten Gehäuseteil 10a des Kolbens 10 und/oder im zweiten deckelförmigen Gehäuseteil 10b des Kolbens 10 eine nicht rotationssymmetrische, bevorzugt rechteckige oder ovale, Ausnehmung 20 geformt, in der ein der Form dieser Ausnehmung 20 angepasster, fest mit dem einen Ende der Verschlussnadel 14 verbundener Nadelkopf 14a bevorzugt verdrehsicher aufgenommen ist. Vom Nadelkopf 14a ausgehend ist die am Kolben 10 aufgenommene Verschlussnadel 14 durch eine weitere, im zweiten deckelartigen Gehäuseabschnitt 2b geformte und mit dem ersten Durchgangskanal 18 fluchtende Durchgangsbohrung 22 hindurchgeführt, welche sich an den ersten Durchgangskanals 18 anschließt. Der Hub des Kolbens 10, der sich in Fig. 2 im unteren Totpunkt in der Schließstellung der Verschlussnadel 14 befindet, ist zum leichteren Verständnis durch die nicht näher bezeichneten strichpunktierten Linien angedeutet.

Im zweiten deckelartigen Gehäuseabschnitt 2b ist weiterhin ein die Verschlussnadel 14 umgebendes umlaufendes Verschlussnadel-Dichtelement 24 angeordnet, welches den Druckmittelraum 4a, 4b beim Verfahren des Kolbens 10 gegen ein Austreten des Druckfluids gegenüber der Außenseite des Gehäuses 2 abdichtet. Das Verschlussnadel-Dichtelement 24 umfasst bevorzugt zumindest einen radial außenliegenden umlaufenden Ring 24a aus gummielastischem Material, insbesondere einen O-Ring, sowie einen innerhalb von diesem angeordneten radial innenliegenden umlaufenden Dichtring 24i aus Dichtwerkstoff, der mit seiner radial innenliegenden Dichtfläche die Außenseite der Verschlussnadel 14 kontaktiert, deren Oberfläche bevorzugt bearbeitet ist und erfindungsgemäß als Dichtfläche wirkt. Bevorzugt sind, wie in Fig. 2 gezeigt, zwei außenliegende Ringe 24a und diesen zugordnete radial innenliegende Dichtringe 24i um die Verschlussnadel 14 herum angeordnet, die durch eine Zwischenscheibe 26i getrennt sind, welche auf ihrer Außenseite ebenfalls durch einen O-Ring 26a gedichtet wird. Der radial innenliegende umlaufende Dichtring 24i sowie der radial außenliegende umlaufende Ring 24a bilden eine Stangendichtung und sind bevorzugt zusammen in einer koaxial zur zweiten Durchgangsbohrung 22 geformten Ausnehmung 28 im zweiten Gehäuseabschnitt 2b aufgenommen. Die Ausnehmung 28 ist insbesondere durch ein Verschlusselement 32 nach Art einer Quetschdichtung oder eines lösbar in diese eingesetzten Einsatzes verschlossen. Das Verschlusselement 32 weist eine dritte Durchgangsbohrung 30 für die Verschlussnadel 14 auf, welche mit dem ersten Durchgangskanal 18 und der weiteren Durchgangsbohrung 22 fluchtet, und wird bevorzugt durch einen weiteren O-Ring 26a in der Ausnehmung 28 abgedichtet.

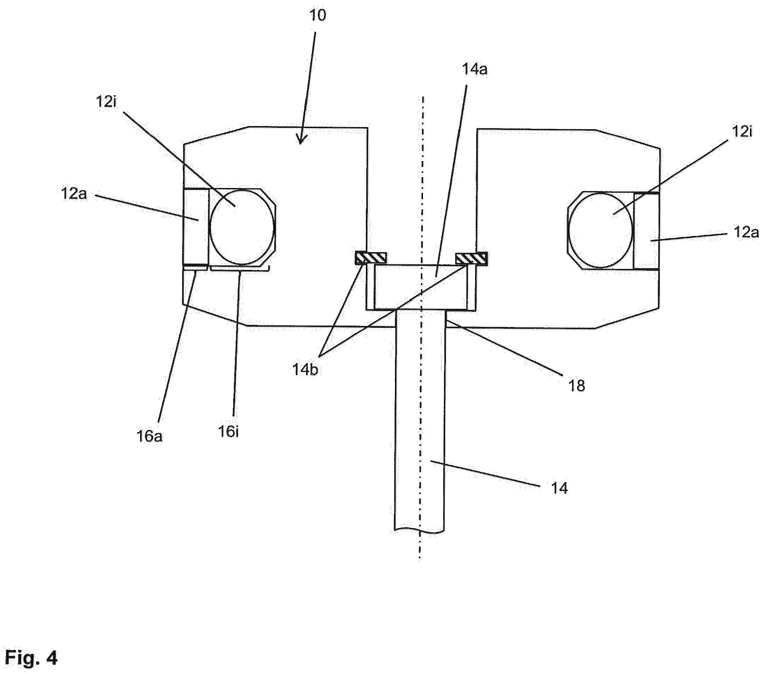

In Fig. 4 ist eine schematische Schnittdarstellung einer weiteren Ausführungsform eines erfindungsgemäßen Kolbens 10 gezeigt, welcher im Gegensatz zu der Ausführungsform von Fig. 2 einteilig aufgebaut ist, und bei welchem die Verschlussnadel 14 durch einen Seegerring 14b innerhalb der Ausnehmung 20 für den Nadelkopf 14 in axialer Richtung fixiert wird. Wie der Darstellung zu entnehmen ist, sind das geschlossen umlaufende gummielastische Dichtelement 12i im ersten radial innenliegenden Nutabschnitt 16i und das geschlossen umlaufende zweite Dichtelement 12a im radial außenliegenden zweiten umlaufenden Nutabschnitt 16a der umlaufenden Nut 16 aufgenommen, in die sie von außen her durch Dehnen der Dichtelemente 12i und 12a eingezogen werden. Anstelle eines Seegerings 14b kann jedoch auch ein anderes bekanntes Klemm- oder Halteelement zum Einsatz gelangen, welches den Nadelkopf 14a in der Ausnehmung 20 fixiert, z.B. eine anstelle des Seegerings 14b von oben her in ein nicht gezeigtes Innengewinde der Ausnehmung einschraubbares schraubenartiges Verschlusselement.

Die Erfindung betrifft weiterhin eine Kunststoffspritzmaschine, wie sie beispielsweise in der DE 10 2010 032 340 A1 der Anmelderin beschrieben ist, und in der eine zuvor beschriebene Vorrichtung 1 zum Einsatz gelangt.

### Liste der Bezugszeichen

- 1: Vorrichtung
- 2: Gehäuse
- 2a: erster oberer Gehäuseabschnitt
- 2b: zweiter unterer deckelartiger Gehäuseabschnitt
- 4a: unterer Druckmittelraum
- 4b: oberer Druckmittelraum
- 6a: Zuleitung für Druckfluid
- 6b: Ableitung für Druckfluid
- 8a: Zuleitung für Kühlmittel
- 8b: Ableitung für Kühlmittel
- 10: Kolben
- 10a: erster Gehäuseteil des Kolbens
- 10b: zweiter deckelförmiger Gehäuseteil des Kolbens
- 11a: Hauptachse
- 11b: Nebenachse
- 12: umlaufendes Dichtelement
- 12a: geschlossen umlaufendes zweites Dichtelement
- 12i: geschlossen umlaufendes gummielastisches erstes Dichtelement
- 14: Verschlussnadel
- 14a: Nadelkopf
- 14b: Seegerring
- 16: umlaufende Nut für Dichtelement
- 16a: radial außenliegender zweiter umlaufender Nutabschnitt
- 16i: radial innenliegender erster Nutabschnitt
- 18: erster Durchgangskanal für Verschlussnadel im ersten Gehäuseteil des Kolbens
- 20: Ausnehmung für Nadelkopf
- 22: weitere Durchgangsbohrung im zweiten deckelartigen Gehäuseabschnitt
- 24: Verschlussnadel-Dichtelement
- 24a: radial außenliegender umlaufender Ring des Verschlussnadeldichtelements
- 24i: radial innenliegender umlaufender Dichtring des Verschlussnadeldichtelements
- 26a: O-Ring des Verschlussnadeldichtelements
- 26b: Zwischenscheibe des Verschlussnadeldichtelements
- 28: Ausnehmung im zweiten Gehäuseabschnitt für Verschlussnadeldichtelement
- 30: dritte Durchgangsbohrung für Verschlussnadel in Verschlusselement
- 32: Verschlusselement

## Patentansprüche

1. Vorrichtung (1) zum Betätigen einer Nadelverschlussdüse in einer Kunststoffspritzmaschine, umfassend ein Gehäuse (2) mit einem darin geformten Druckmittelraum (4a, 4b), welcher über eine Zu- und Ableitung (6a, 6b) mit einem Druckfluid beaufschlagbar ist, sowie einen im Druckmittelraum (4a, 4b) zwischen zwei Endstellungen hin und her bewegbaren Kolben (10), welcher über ein umlaufendes Dichtelement (12) dichtend im Druckmittelraum (4a, 4b) geführt ist und welcher auf eine Verschlussnadel (14) der Nadelverschlussdüse wirkt,
**dadurch gekennzeichnet,**
**dass** der Kolben (10) und der Druckmittelraum (4a, 4b) einen nicht kreisförmigen ovalen Querschnitt besitzen.

2. Vorrichtung (1) nach Anspruch 1,
**dadurch gekennzeichnet,**
**dass** die Querschnittsfläche des Kolbens (10) eine bevorzugt elliptische Form aufweist und eine Hauptachse (11a) sowie eine senkrecht zu dieser verlaufende Nebenachse (11b) umfasst, deren Längenverhältnis größer gleich 1 : 5 und kleiner gleich 1 : 1,5 ist.

3. Vorrichtung (1) nach einem der vorhergehenden Ansprüche,
**dadurch gekennzeichnet,**
**dass** in der Umfangsfläche des Kolbens (10) eine umlaufende Nut (16) geformt ist, die einen radial innenliegenden ersten Nutabschnitt (16i) zur Aufnahme eines gummielastischen geschlossen umlaufenden ersten Dichtelements (12i), insbesondere eines O-Rings, sowie einen gegenüber diesem radial außenliegenden zweiten umlaufenden Nutabschnitt (16a) zur Aufnahme eines geschlossen umlaufenden zweiten Dichtelements (12a) umfasst.

4. Vorrichtung (1) nach Anspruch 3,
**dadurch gekennzeichnet,**
**dass** der Kolben (10) einen ersten Gehäuseteil (10a) und einen zweiten, lösbar mit diesem verbindbaren deckelförmigen Gehäuseteil (10b) aufweist, zwischen denen die umlaufende Nut (16) zur Aufnahme des Dichtelements (12) geformt ist.

5. Vorrichtung (1) nach Anspruch 4,
**dadurch gekennzeichnet,**
**dass** im ersten Gehäuseteil (10a) ein Durchgangskanal (18) zur Aufnahme der Verschlussnadel (14) geformt ist, welcher einen der äußeren Form der Verschlussnadel (14) angepassten Querschnitt besitzt.

6. Vorrichtung (1) nach einem der vorhergehenden Ansprüche,
**dadurch gekennzeichnet,**
**dass** im Kolben (10a) eine nicht rotationssymmetrische, bevorzugt rechteckige oder nicht kreisförmige ovale Ausnehmung (20) geformt ist, in der ein der Form der Ausnehmung (20) angepasster, fest mit dem einen Ende der Verschlussnadel (14) verbundener Nadelkopf (14a) verdrehsicher aufnehmbar ist.

7. Vorrichtung (1) nach einem der vorhergehenden Ansprüche,
**dadurch gekennzeichnet,**
**dass** das Gehäuse (2) zweiteilig aufgebaut ist, und einen ersten oberen, den Druckmittelraum enthaltenden Gehäuseabschnitt (2a) sowie einen zweiten unteren deckelartigen Gehäuseabschnitt (2b) zum Verschließen des Druckmittelraums (4b) aufweist, wobei im zweiten deckelartigen Gehäuseabschnitt (2b) eine weitere Durchgangsbohrung (22) geformt ist, durch welche hindurch die am Kolben (10) aufgenommene Verschlussnadel (14) hindurchführbar ist.

8. Vorrichtung (1) nach Anspruch 7,
**dadurch gekennzeichnet,**
**dass** im zweiten deckelartigen Gehäuseabschnitt (2b) ein die Verschlussnadel (14) umgebendes umlaufendes Verschlussnadel-Dichtelement (24) angeordnet ist, welches den Druckmittelraum (4a) gegen einen Austritt des Druckfluids beim Verfahren des Kolbens (10) gegenüber der Außenseite des Gehäuses (2) abdichtet.

9. Vorrichtung (1) nach Anspruch 8,
**dadurch gekennzeichnet,**
**dass** das Verschlussnadel-Dichtelement (24) einen radial außenliegenden umlaufenden Ring (26a) aus gummielastischem Material, insbesondere einen O-Ring, sowie einen innerhalb von diesem angeordneten, die Außenseite der Verschlussnadel (14) kontaktierenden radial innenliegenden umlaufenden Dichtring (26i) aus Dichtwerkstoff umfasst, die in einer koaxial zur zweiten Durchgangsbohrung (22) geformten Ausnehmung (28) im zweiten Gehäuseabschnitt (2b) aufnehmbar sind, welche insbesondere durch ein Verschlusselement (32) nach Art einer Quetschdichtung verschließbar ist, welches eine dritte Durchgangsbohrung (30) für die Verschlussnadel (14) aufweist.

10. Kunststoffspritzmaschine enthaltend eine Vorrichtung (1) nach einem der vorhergehenden Ansprüche.
